# EUROPÄISCHE PATENTSCHRIFT

(11) **EP 4 141 603 B1**
(45) Veröffentlichungstag und Bekanntmachung des Hinweises auf die Patenterteilung: **30.10.2024**
(21) Anmeldenummer: 22182085.5
(22) Anmeldetag: 30.06.2022
(51) Int. Cl.: G05D 1/00, G05B 19/418, G06Q 10/08, G08G 1/09

(54) **SCHRANKENANORDNUNG ZUM SICHEREN BETRIEB EINES AUTOMATISCHEN TRANSPORTFAHRZEUGS**
CABINET ARRANGEMENT FOR SAFE OPERATION OF AN AUTOMATIC TRANSPORT VEHICLE
DISPOSITIF BARRIÈRE DESTINÉ AU FONCTIONNEMENT SÉCURISÉ D'UN VÉHICULE DE TRANSPORT AUTOMATIQUE

(30) Priorität: 24.08.2021 DE 102021209263
(43) Veröffentlichungstag der Anmeldung: 01.03.2023
(73) Patentinhaber: Stellantis Auto SAS, 78300 Poissy (FR)
(72) Erfinder: VENT, Stephan, 65428 Rüsselsheim am Main (DE)
(74) Vertreter: Spitzfaden, Ralf

(56) Entgegenhaltungen:
- WO-A1-2020/206478
- DE-A1- 102019 118 710
- GB-A- 2 146 065

## Beschreibung

Die Erfindung betrifft eine Anordnung umfassend eine erste Schranke und eine zweite Schranke, sowie ein System umfassend eine solche Anordnung.

Automatische Transportfahrzeuge (auch genannt "fahrerlose Transportsysteme", kurz "FTS") werden zunehmend in Montagelinien und anderen Produktionsbetrieben eingesetzt, um den Materialfluss zu vereinfachen und zu beschleunigen. Häufig sind diese automatischen Transportfahrzeuge batteriebetriebene, schwere Elektrofahrzeuge für den Betrieb auf einem Werksgelände, insbesondere sogenannte Flurförderzeuge. Die automatischen Transportfahrzeuge dieser Art sind typischerweise dazu in der Lage, Fahrten von einem Startort zu einem Zielort automatisch und ohne Fahrer durchzuführen, während jedoch ein Anwender grundsätzlich die volle Kontroll-Möglichkeit behält und beispielsweise die Fahrt initiieren kann. Situationen können auftreten, in denen aus Sicherheitsgründen ein vorzeitiger Stopp des automatischen Transportfahrzeugs wünschenswert ist. Hierzu sind im Stand der Technik verschiedene Verfahren zum Anhalten eines fahrerlosen Transportfahrzeugs bekannt.

Die DE 10 2016 006 639 A1 betrifft hierzu ein Verfahren zum Anhalten eines fahrerlosen Transportfahrzeuges, wobei das Transportfahrzeug von einem Sicherheitsschutzfeld umgeben ist und das fahrerlose Transportfahrzeug während eines Arbeitsschrittes an einem durch das Transportfahrzeug transportierten Ladegut angehalten wird, wobei das Anhalten des fahrerlosen Transportfahrzeuges durch ein Stören des Sicherheitsschutzfeldes ausgelöst wird.

Die DE 10 2004 047 209 B4 betrifft ferner ein Verfahren zur Sicherheitsüberwachung für Transportfahrzeuge, das folgendes umfasst: Aktivierung eines Sichtfelds in einem Bereich um ein Transportfahrzeug, in dem die Konturen eines Zielobjekts oder das Zielobjekt des Transportfahrzeugs durch eine 3D-Vermessung bestimmt werden; Aktivierung eines Sicherheitsfelds in einem Teilbereich des Sichtfelds, in dem eine Verletzung durch ein Objekt bestimmt werden kann, das nicht das Zielobjekt ist, wobei die Fläche des Sicherheitsfelds einstellbar oder schaltbar ist; Abtasten des Sichtfelds und des Sicherheitsfelds; und Einleiten des Nothalts des Transportfahrzeugs falls eine Verletzung des Sicherheitsfelds bestimmt wird, wobei die 3D-Vermessung die Projektion des Zielobjekts auf den Boden bestimmt, um die Geometrie des Freiraumes davor zu errechnen, und das weiterhin folgendes umfasst: Bestimmung, ob zum Zeitpunkt der Aufnahme ein Objekt zwischen dem Transportfahrzeug bzw. der Last und dem Zielobjekt befindlich ist; und falls kein Objekt bestimmt wird, Bestimmung eines Anfahrpunkts für das Transportfahrzeug vor der Projektion des Zielobjekts, der derart von der Projektion des Zielobjekts beabstandet ist, dass angenommen werden kann, dass sich kein Mensch zwischen dem Sicherheitsfeld vor dem Transportfahrzeug bzw. vor der Last und dem Zielobjekt befindet, Abschalten des Sicherheitsfelds bei Erreichen des Anfahrpunktes.

Ferner ist die Absicherung von Gefahrenzonen durch Schranken bekannt.

Die EP 739851 A2 betrifft hierzu einen Bauaufzug mit einer manuellen Schranke, die den Übergang zwischen dem Bauaufzug und dem Boden des Gebäudes gegen seitliches Herausfallen und eine Klappe zum Überbrücken dieses Spalts oder einer Stufe sichert. Die Klappe stellt im eingeklappten Zustand eine Schranke gegen unbeabsichtigtes Verlassen des Aufzugs dar. Die Verbindung zwischen den beiden Schranken wird durch eine Schub-/Zugstange gewährleistet.

Die DE 20 200 5011 946 U1 betrifft eine Sicherheitsvorrichtung für Schränke, die umfasst: Eine fixierende Basis, eine verschiebbare Basis, die auf der fixierenden Basis montiert ist, sich von oben bis zum Boden des Schranks erstreckt und ein U-förmiges vorstehendes Teil einschließt, wobei mehrere zweite Fenster in dem vorstehenden Teil der verschiebbaren Basis festgelegt sind; ein Sperrelement, das eine erste Zunge mit einer ersten Kerbe und ein abgeschrägtes Teil in V-Form, das am entfernten Ende der ersten Zunge ausgeformt ist, besitzt; und ein Befestigungselement mit einem Kolben, einem Basisrohr, in dem der Kolben aufgenommen wird, einem Federelement und einem Schalterelement, das zwischen dem Basisrohr und dem Kolben gesichert ist.

Die EP 913898 B1 betrifft schließlich eine Sicherheitsverriegelung eines Schaltschranks, welche, abhängig vom elektrischen Betriebszustand innerhalb des Schaltschranks, mittels einer zu einem Sperrriegel ausgebildeten Schubstange ein manuelles Öffnen des Schaltschranks mechanisch unterbindet.

Ferner bekannt sind die WO 2020/20648 A1, die GB 2 146 065 A und die gattungsbildende DE 10 2019 118710 A1.

Aufgabe der Erfindung ist es, den Betrieb eines automatischen Transportfahrzeugs in einer Produktionsstätte, insbesondere in einem stationären Ladebereich innerhalb der Produktionsstätte, sicherer zu gestalten.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Anordnung umfassend eine erste Schranke und eine zweite Schranke, wobei die erste Schranke dazu dient, einen Ladeweg in einem stationären Ladebereich hin zu einer Ladefläche eines sich in dem stationären Ladebereich befindlichen automatischen Transportfahrzeugs mit Hinderniserkennung und Stoppfunktion zu versperren, und die zweite Schranke dazu dient, einen Ausfahrtsweg des automatischen Transportfahrzeugs aus dem stationären Ladebereich zu versperren, wobei die erste Schranke und die zweite Schranke über eine mechanische Kraftübertragungseinrichtung so verkoppelt sind, dass sich beim Schließen der ersten Schranke die zweite Schranke öffnet und umgekehrt, sodass durch das automatische Transportfahrzeug beim Erkennen der geschlossenen zweiten Schranke durch dessen Hinderniserkennung eine automatisierte Anfahrt des automatischen Transportfahrzeugs durch dessen Stoppfunktion verhindert wird während die erste Schranke geöffnet ist, und sodass bei geschlossener erster Schranke der Ausfahrtsweg frei ist und der Ladeweg versperrt ist.

Durch die mechanische Kopplung der beiden Schranken wird erreicht, dass immer nur eine Schranke zu einem Zeitpunkt vollständig geöffnet sein kann. Ist beispielsweise die erste Schranke geöffnet, kann das automatische Transportfahrzeug beladen und entladen werden. Dies führt dazu, dass die zweite Schranke jedoch geschlossen ist und den Ausfahrtsweg für das automatische Transportfahrzeug versperrt - das heißt, zumindest für einen (optischen) Scanner des Transportfahrzeugs ein Hindernis bietet. Während das automatische Transportfahrzeug nicht notwendigerweise durch die geschlossene zweite Schranke aufgehalten werden muss, sorgt die Hinderniserkennung und die Stoppfunktion des automatischen Transportfahrzeugs dafür, dass eine Anfahrt des automatischen Transportfahrzeugs verhindert wird. Die Hinderniserkennung erkennt das Vorhandensein der Planke der zweiten Schranke unmittelbar vorderhalb des automatischen Transportfahrzeugs als Hindernis. Die Hinderniserkennung stützt sich dabei insbesondere auf Ultraschallsensoren, Kameradaten oder Radardaten. Wird ein Hindernis in unmittelbarer Nähe vorderhalb des automatischen Transportfahrzeugs erkannt, schreitet die Stoppfunktion des automatischen Transportfahrzeugs ein und bringt das automatische Transportfahrzeug in den Stillstand bzw. verhindert eine Anfahrt aus dem Stillstand.

Wird jedoch die zweite Schranke in den offenen Zustand gebracht, kann zwar das automatische Transportfahrzeug die Anfahrt einleiten und sich aus dem stationären Ladebereich entfernen, währenddessen ist jedoch bereits die erste Schranke in den geschlossenen Zustand gebracht und versperrt einem Lademeister das Beladen oder Entladen des automatischen Transportfahrzeugs.

Es ist daher eine vorteilhafte Wirkung der Erfindung, dass der Betrieb eines automatischen Transportfahrzeugs in einer stationären Ladezone, wie sie häufig innerhalb einer Montagelinie verwendet wird, dahingehend sicherer gestaltet wird, dass auch beim Abgeben eines Kommandos durch einen Anwender zum Losfahren des automatischen Transportfahrzeugs aus der Ladezone die Anfahrt nicht erfolgt, solange noch die zweite Schranke geschlossen ist. Andererseits wird dem Ladepersonal der Zugang zur Ladefläche des automatischen Transportfahrzeugs versperrt durch die erste Schranke, wenn die zweite Schranke geöffnet ist und somit eine Weiterfahrt des automatischen Transportfahrzeugs erlaubt wird.

Gemäß einer vorteilhaften Ausführungsform ist an der zweiten Schranke ein Vorhang zur Erfassung durch die Hinderniserkennung des automatischen Transportfahrzeugs angeordnet. Der Vorhang verbessert vorteilhaft die Erkennung durch das automatische Transportfahrzeug, sodass die geschlossene zweite Schranke zuverlässiger als Hindernis erkannt wird und die Anfahrt des automatischen Transportfahrzeugs verhindert wird.

Gemäß einer weiteren vorteilhaften Ausführungsform ist der Vorhang ein Kettenvorhang.

Gemäß einer weiteren vorteilhaften Ausführungsform umfasst die mechanische Kraftübertragungseinrichtung ein biegeweiches Zugkraft-Übertragungsmittel, insbesondere eines aus: Seil, Leine, Stahlkabel, Band.

Gemäß einer weiteren vorteilhaften Ausführungsform weisen die erste Schranke ein erstes Gegengewicht und die zweite Schranke ein zweites Gegengewicht auf, um zumindest das Gewicht der jeweiligen Schrankenplanke auszugleichen.

Gemäß einer weiteren vorteilhaften Ausführungsform unterkompensiert das Gegengewicht einer der Schranken das Gewicht der zugehörigen Schrankenplanke und das Gegengewicht der anderen Schranke überkompensiert das Gewicht der zugehörigen Schrankenplanke, sodass sich ein natürlicher Gleichgewichtszustand beim Loslassen der beiden Schranken einstellt, bei dem eine der Schranken geschlossen und die andere der Schranken geöffnet ist.

Gemäß einer weiteren vorteilhaften Ausführungsform weist zumindest eine der Schranken einen Anschlag auf, sodass die Schrankenplanke nicht unter die horizontale Stellung bewegt werden kann.

Gemäß einer weiteren vorteilhaften Ausführungsform ist an zumindest einer der Schranken das Gegengewicht an einem Ausleger angeordnet, wobei der Ausleger so angeordnet ist, dass eine gedachte Verbindungslinie zwischen dem Schwerpunkt des Gegengewichts und dem Drehpunkt der Schranke mit der Schrankenplanke einen Winkel größer als 90° und kleiner als 180° einschließt, sodass das Gegengewicht bei sperrender Stellung der Schranke durch horizontale Lage der Schrankenplanke außerhalb eines Totpunkts ist.

Ein weiterer Aspekt der Erfindung betrifft ein System umfassend eine Anordnung wie oben und im Folgenden beschrieben, das automatische Transportfahrzeug mit Hinderniserkennung und Stoppfunktion, sowie ein Führungssystem zur Führung und Navigation des automatischen Transportfahrzeugs durch den stationären Ladebereich.

Gemäß einer weiteren vorteilhaften Ausführungsform umfasst das System den stationären Ladebereich in Form einer Beladestation, in der der Ausfahrtsweg des automatischen Transportfahrzeugs quer zum Ladeweg vorbeiführt.

Gemäß einer weiteren vorteilhaften Ausführungsform umfasst das Führungssystem zur Führung und Navigation des automatischen Transportfahrzeugs ein im Boden angeordnetes Kabel oder Magnetband.

Gemäß einer weiteren vorteilhaften Ausführungsform führt der Ladeweg über eine Laderampe und ist quer zur Fahrtrichtung im Ausfahrtweg des automatischen Transportfahrzeugs ausgerichtet, sodass die erste Schranke und die zweite Schranke im gedachten geschlossenen Zustand senkrecht zueinander ausgerichtet sind.

Gemäß einer weiteren vorteilhaften Ausführungsform ist das automatische Transportfahrzeug ein Flurförderzeug.

Gemäß einer weiteren vorteilhaften Ausführungsform weist das Transportfahrzeug eine Zugmaschine und einen Anhänger auf, wobei das Führungssystem dazu ausgeführt ist, einen automatischen Halt des automatischen Transportfahrzeugs im stationären Ladebereich neben der Laderampe zu initiieren, wobei das System ein Eingabemittel aufweist, wobei das Eingabemittel dazu ausgeführt ist, beim Erfassen einer Eingabe eines Anwenders am Eingabemittel ein Signal an das Führungssystem zu übermitteln, um eine Anfahrt des automatischen Transportfahrzeugs durch das Führungssystem zu initiieren, wobei die Initiierung der Anfahrt beim Erkennen der geschlossenen zweiten Schranke durch die Hinderniserkennung und die Stoppfunktion des automatischen Transportfahrzeugs verhindert wird.

Gemäß einer weiteren vorteilhaften Ausführungsform ist das Eingabemittel ein Abfahrtknopf.

Vorteile und bevorzugte Weiterbildungen des vorgeschlagenen Systems ergeben sich durch eine analoge und sinngemäße Übertragung der im Zusammenhang mit der vorgeschlagenen Anordnung vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Einen ersten Teil der Anordnung gemäß einem Ausführungsbeispiel der Erfindung.
- Fig. 2:: Einen zweiten Teil der Anordnung nach Fig. 1.
- Fig. 3:: Ein System mit einer solchen Anordnung.

Die Darstellungen in den Figuren sind schematisch und nicht maßstäblich.

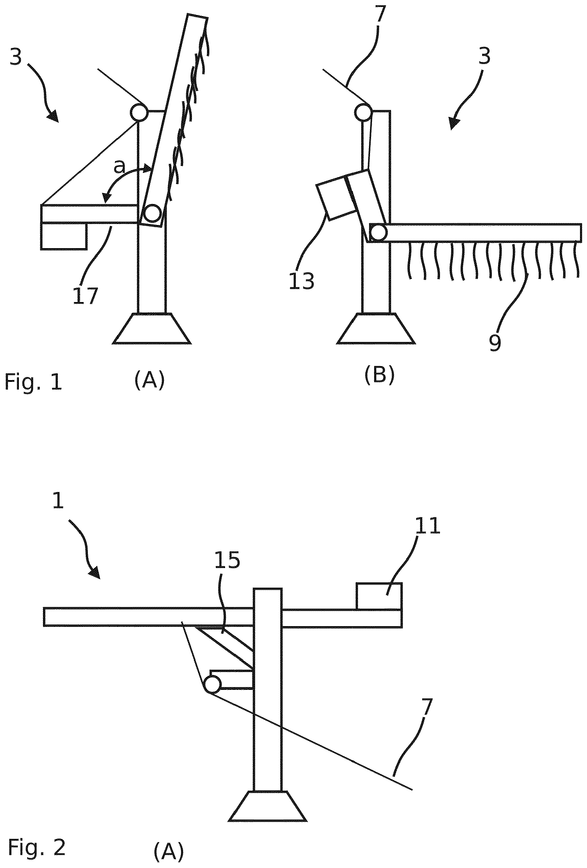

Fig. 1 zeigt die zweite Schranke 3 der Anordnung. Die erste Schranke 1 ist in Fig. 2 dargestellt. Die zweite Schranke 3 dient dazu, einen Ausfahrtsweg des automatischen Transportfahrzeugs 5 aus dem stationären Ladebereich zu versperren. Die erste Schranke 1 und die zweite Schranke 3 sind über ein Zugseil als mechanische Kraftübertragungseinrichtung 7 so verkoppelt, dass sich beim Schließen der ersten Schranke 1 die zweite Schranke 3 öffnet und umgekehrt. Im Zustand (A) ist die zweite Schranke 3 geöffnet gezeichnet, im Zustand (B) geschlossen. Das Seil 7 wird dabei an einer Umlenkrolle so umgelenkt, dass es unabhängig von der Öffnungsstellung im immer gleichen Winkel die zweite Schranke 3 verlässt. Vom automatischen Transportfahrzeug 5 wird beim Erkennen der geschlossenen zweiten Schranke 3 durch dessen Hinderniserkennung eine automatisierte Anfahrt des automatischen Transportfahrzeugs 5 durch dessen Stoppfunktion verhindert, während jedoch die erste Schranke 1 geöffnet ist und eine Beladung durch einen Lademeister erlaubt. Dagegen ist bei geschlossener erster Schranke 1 (siehe (A) in Fig. 2) der Ausfahrtsweg frei ((A) in Fig. 1) und der Ladeweg durch die erste Schranke 1 versperrt. An der zweiten Schranke 3 ist ein Kettenvorhang 9 zur Erfassung durch die Hinderniserkennung des automatischen Transportfahrzeugs 5 angeordnet. Weitere Details der Anordnung sind unter Fig. 2 erklärt.

Fig. 2 zeigt die erste Schranke 1 der Anordnung, die dazu dient, einen Ladeweg in einem stationären Ladebereich hin zu einer Ladefläche eines sich in dem stationären Ladebereich befindlichen automatischen Transportfahrzeugs 5 mit Hinderniserkennung und Stoppfunktion zu versperren - daher ist die Schrankenplanke höher angeordnet als die der zweiten Schranke 3. Die erste Schranke 1 weist ein erstes Gegengewicht 11 und die zweite Schranke 3 ein zweites Gegengewicht 13 auf, um zumindest das Gewicht der jeweiligen Schrankenplanke auszugleichen. Das Gegengewicht der zweiten Schranke 3 überkompensiert jedoch das Gewicht der zugehörigen Schrankenplanke, sodass die zweite Schranke 3 immer in die Öffnungsposition drängt, wenn sie nicht aktiv unten gehalten wird. Die erste Schranke, die an einem Anschlag 15 gehalten wird, weist diese Eigenschaft nicht auf und muss mit Kraft nach oben gezogen werden, wobei die Zugkraft am Seil auf die zweite Schranke 3 übertragen wird, sodass sich die zweite Schranke aufgrund des Seilzugs schließt. Der eingezeichnete Winkel a in Fig. 1 ist zur Erreichung dieses Effekts leicht größer als 90°, und auch in geschlossener Stellung der zweiten Schranke 3 wirkt ein öffnendes Moment auf die zweite Schranke 3, ohne dass das Gegengewicht 13 am Ausleger 17 in einen Totpunkt verfallen würde. Das Gegengewicht 11 der ersten Schranke hingegen erleichtert nur die manuelle Öffnung der ersten Schranke 1.

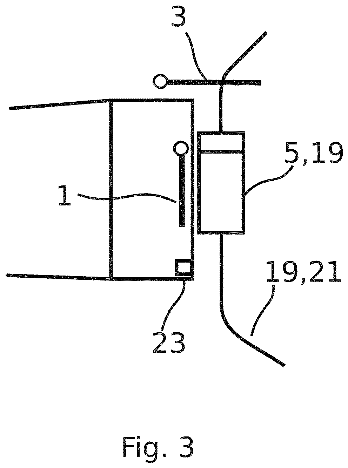

Fig. 3 zeigt ein System umfassend eine Anordnung wie oben beschrieben, das automatische Transportfahrzeug 5 mit Hinderniserkennung und Stoppfunktion, sowie ein Führungssystem 19 zur Führung und Navigation des automatischen Transportfahrzeugs 5 durch den stationären Ladebereich. Das System umfasst den stationären Ladebereich in Form einer Beladestation, in der der Ausfahrtsweg des automatischen Transportfahrzeugs 5 quer zum Ladeweg vorbeiführt. Die Halteposition wird bestimmt durch ein auf dem Boden befindliches RFID-TAG, welches das Stoppen des Transportfahrzeugs 5 auslöst. Zur Richtungslenkung weist das Führungssystem 19 ein im Boden angeordnetes Kabel 21 auf. Der Ladeweg führt über eine Laderampe und ist quer zur Fahrtrichtung im Ausfahrtweg des automatischen Transportfahrzeugs 5 ausgerichtet. Damit ein Werker vom Podest der Laderampe aus automatische Transportfahrzeug 5 zum Beladen betreten kann, muss das Führungssystem 19 mit dem Transportfahrzeug 5 auf Spaltbreite an das Podest heranfahren. Hierbei entstehen gefährliche Quetschstellen, die es auszuschließen gilt, indem die erste Schranke 1 solange geschlossen bleibt. Das System weist ferner ein Eingabemittel 23 auf, wobei das Eingabemittel 23 dazu ausgeführt ist, beim Erfassen einer Eingabe eines Anwenders am Eingabemittel 23 ein Signal an das Führungssystem 19 zu übermitteln, um eine Anfahrt des automatischen Transportfahrzeugs 5 durch das Führungssystem 19 zu initiieren, wobei die Initiierung der Anfahrt beim Erkennen der geschlossenen zweiten Schranke 3 durch die Hinderniserkennung und die Stoppfunktion des automatischen Transportfahrzeugs 5 verhindert wird. So wird erst nach erneuerter Schließung der ersten Schranke 1 eine Ausfahrt des automatischen Transportfahrzeugs 5 ermöglicht.

### Bezugszeichenliste

- 1: erste Schranke
- 3: zweite Schranke
- 5: automatisches Transportfahrzeug
- 7: Kraftübertragungseinrichtung
- 9: Vorhang
- 11: erstes Gegengewicht
- 13: zweites Gegengewicht
- 15: Anschlag
- 17: Ausleger
- 19: Führungssystem
- 21: Stahlkabel
- 23: Eingabemittel

## Patentansprüche

1. Anordnung umfassend eine erste Schranke (1) und eine zweite Schranke (3), wobei die erste Schranke (1) dazu dient, einen Ladeweg in einem stationären Ladebereich hin zu einer Ladefläche eines sich in dem stationären Ladebereich befindlichen automatischen Transportfahrzeugs (5) mit Hinderniserkennung und Stoppfunktion zu versperren, und die zweite Schranke (3) dazu dient, einen Ausfahrtsweg des automatischen Transportfahrzeugs (5) aus dem stationären Ladebereich zu versperren, wobei die erste Schranke (1) und die zweite Schranke (3) über eine mechanische Kraftübertragungseinrichtung (7) so verkoppelt sind, dass sich beim Schließen der ersten Schranke (1) die zweite Schranke (3) öffnet und umgekehrt, sodass durch das automatische Transportfahrzeug (5) beim Erkennen der geschlossenen zweiten Schranke (3) durch dessen Hinderniserkennung eine automatisierte Anfahrt des automatischen Transportfahrzeugs (5) durch dessen Stoppfunktion verhindert wird während die erste Schranke (1) geöffnet ist, und sodass bei geschlossener erster Schranke (1) der Ladeweg versperrt ist und der Ausfahrtsweg frei ist.

2. Anordnung nach Anspruch 1,
wobei an der zweiten Schranke (3) ein Vorhang (9) zur Erfassung durch die Hinderniserkennung des automatischen Transportfahrzeugs (5) angeordnet ist.

3. Anordnung nach Anspruch 2,
wobei der Vorhang (9) ein Kettenvorhang ist.

4. Anordnung nach einem der vorhergehenden Ansprüche,
wobei die mechanische Kraftübertragungseinrichtung (7) ein biegeweiches Zugkraft-Übertragungsmittel umfasst, insbesondere eines aus: Seil, Leine, Stahlkabel (21), Band.

5. Anordnung nach einem der vorhergehenden Ansprüche,
wobei die erste Schranke (1) ein erstes Gegengewicht (11) und die zweite Schranke (3) ein zweites Gegengewicht (13) aufweisen, um zumindest das Gewicht der jeweiligen Schrankenplanke auszugleichen.

6. Anordnung nach Anspruch 5,
wobei das Gegengewicht einer der Schranken das Gewicht der zugehörigen Schrankenplanke überkompensiert und das Gegengewicht der anderen Schranke das Gewicht der zugehörigen Schrankenplanke unterkompensiert, sodass sich ein natürlicher Gleichgewichtszustand beim Loslassen der beiden Schranken einstellt, bei dem eine der Schranken geschlossen und die andere der Schranken geöffnet ist.

7. Anordnung nach einem der Ansprüche 5 bis 6,
wobei zumindest eine der Schranken einen Anschlag (15) aufweist, sodass die Schrankenplanke nicht unter die horizontale Stellung bewegt werden kann.

8. Anordnung nach einem der Ansprüche 5 bis 7,
wobei an zumindest einer der Schranken das Gegengewicht an einem Ausleger (17) angeordnet ist, wobei der Ausleger (17) so angeordnet ist, dass eine gedachte Verbindungslinie zwischen dem Schwerpunkt des Gegengewichts und dem Drehpunkt der Schranke mit der Schrankenplanke einen Winkel größer als 90° und kleiner als 180° einschließt, sodass das Gegengewicht bei sperrender Stellung der Schranke durch horizontale Lage der Schrankenplanke außerhalb eines Totpunkts ist.

9. System umfassend eine Anordnung nach einem der vorhergehenden Ansprüche, das automatische Transportfahrzeug (5) mit Hinderniserkennung und Stoppfunktion, sowie ein Führungssystem (19) zur Führung und Navigation des automatischen Transportfahrzeugs (5) durch den stationären Ladebereich.

10. System nach Anspruch 9,
wobei das System den stationären Ladebereich in Form einer Beladestation umfasst, in der der Ausfahrtsweg des automatischen Transportfahrzeugs (5) quer zum Ladeweg vorbeiführt.

11. System nach einem der Ansprüche 9 bis 10,
wobei das Führungssystem (19) zur Führung und Navigation des automatischen Transportfahrzeugs (5) ein im Boden angeordnetes Kabel (21) umfasst.

12. System nach einem der Ansprüche 9 bis 11,
wobei der Ladeweg über eine Laderampe führt und quer zur Fahrtrichtung im Ausfahrtweg des automatischen Transportfahrzeugs (5) ausgerichtet ist, sodass die erste Schranke (1) und die zweite Schranke (3) im gedachten geschlossenen Zustand senkrecht zueinander ausgerichtet sind.

13. System nach einem der Ansprüche 9 bis 12,
wobei das automatische Transportfahrzeug (5) ein Flurförderzeug ist.

14. System nach Anspruch 13,
wobei das Transportfahrzeug eine Zugmaschine und einen Anhänger aufweist, wobei das Führungssystem (19) dazu ausgeführt ist, einen automatischen Halt des automatischen Transportfahrzeugs (5) im stationären Ladebereich neben der Laderampe zu initiieren, wobei das System ein Eingabemittel (23) aufweist, wobei das Eingabemittel (23) dazu ausgeführt ist, beim Erfassen einer Eingabe eines Anwenders am Eingabemittel (23) ein Signal an das Führungssystem (19) zu übermitteln, um eine Anfahrt des automatischen Transportfahrzeugs (5) durch das Führungssystem (19) zu initiieren, wobei die Initiierung der Anfahrt beim Erkennen der geschlossenen zweiten Schranke (3) durch die Hinderniserkennung und die Stoppfunktion des automatischen Transportfahrzeugs (5) verhindert wird.

15. System nach einem der Ansprüche 9 bis 14,
wobei das Eingabemittel (23) ein Abfahrtknopf ist.

## Claims

1. Arrangement comprising a first barrier (1) and a second barrier (3), the first barrier (1) serving to create a loading path in a stationary loading area to a loading area of an automatic transport vehicle (5) located in the stationary loading area, with obstacle detection and stopping function, and the second barrier (3) serving to block an exit path of the automatic transport vehicle (5) from the stationary loading area, the first barrier (1) and the second barrier. (3) via a mechanical force transmission device (7) are coupled such that when the first barrier (1) closes, the second barrier (3) opens and vice versa, so that when the automatic transport vehicle (5) detects the second barrier (3) closed by its obstacle detection, an automated approach of the automatic transport vehicle (5) is prevented by its stopping function while the first barrier (1) is open, and such that when the first barrier (1) is open, 1) is closed, the loading path is blocked and the exit path is free.

2. Arrangement according to claim 1, wherein a curtain (9) is arranged on the second barrier (3) for detection by obstacle detection of the automatic transport vehicle (5).

3. Arrangement according to claim 2, wherein the curtain (9) is a chain curtain.

4. Arrangement according to one of the preceding claims, in which the mechanical force transmission device (7) comprises a flexible means for transmitting tensile force, in particular consisting of: rope, line, steel cable (21), strip.

5. Arrangement according to one of the preceding claims, the first barrier (1) having a first counterweight (11) and the second barrier (3) having a second counterweight (13) in order to balance at least the weight of the respective barrier board.

6. Arrangement according to claim 5, the counterweight of one of the barriers overcompensating the weight of the associated barrier board and the counterweight of the other barrier undercompensating the weight of the associated barrier board, so that a state of natural equilibrium occurs when both barriers are released, in which one of the barriers is closed and the other of the barriers is open.

7. Arrangement according to one of claims 5 to 6, wherein at least one of the barriers has a stop (15) such that the barrier board cannot be moved below the horizontal position.

8. Arrangement according to one of claims 5 to 7, wherein the counterweight is arranged on a boom (17) on at least one of the barriers, the boom (17) being arranged such that an imaginary connecting line between the center of gravity of the counterweight and the pivot point of the barrier with the barrier board forms an angle greater than 90° and less than 180°, such that the counterweight is outside a dead center when the barrier is in the locking position due to the horizontal position of the barrier board.

9. A system comprising an arrangement according to one of the preceding claims, the automatic transport vehicle (5) with obstacle detection and stopping function, and a guidance system (19) for guiding and navigating the automatic transport vehicle (5) through the stationary loading area.

10. A system according to claim 9, the system comprising the stationary loading area in the form of a loading station in which the exit path of the automatic transport vehicle (5) runs transversely to the loading path.

11. A system according to one of claims 9 to 10, wherein the guidance system (19) for guiding and navigating the automatic transport vehicle (5) comprises a cable (21) arranged in the floor.

12. System according to one of claims 9 to 11, wherein the loading path passes through a loading ramp and is aligned transversely to the direction of travel in the exit path of the automatic transport vehicle (5), so that the first barrier (1) and the second barrier (3) are aligned perpendicular to each other in an imaginary closed state.

13. System according to one of claims 9 to 12, the automatic transport vehicle (5) being an industrial truck.

14. System according to claim 13, the transport vehicle comprising a tractor and a trailer, the guidance system (19) being adapted to trigger an automatic stop of the automatic transport vehicle (5) in the stationary loading area next to the loading ramp, the system comprising an input means (23), wherein the input means (23) is adapted to transmit a signal to the guidance system (19) when an input of a user is detected on the input means (23) in order to initiate the movement of the automatic transport vehicle (5). By means of the guidance system (19), the initiation of the approach when the second closed barrier (3) is detected is prevented by the obstacle detection and the stopping function of the automatic transport vehicle (5).

15. System according to one of claims 9 to 14, in which the input means (23)

## Revendications

1. Agencement comprenant une première barrière (1) et une deuxième barrière (3), la première barrière (1) servant à créer un chemin de chargement dans une aire de chargement stationnaire vers une aire de chargement d'un véhicule de transport automatique (5) situé dans la zone de chargement stationnaire, avec fonction de détection d'obstacles et d'arrêt, et la deuxième barrière (3) sert à bloquer une voie de sortie du véhicule de transport automatique (5) de la zone de chargement stationnaire, la première barrière (1) et la deuxième barrière. (3) via un dispositif de transmission de force mécanique (7) sont couplés de telle sorte que lorsque la première barrière (1) se ferme, la deuxième barrière (3) s'ouvre et vice versa, de sorte que lorsque le véhicule de transport automatique (5) détecte la deuxième barrière (3) fermée grâce à sa détection d'obstacle, une approche automatisée du véhicule de transport automatique (5) est empêchée par sa fonction d'arrêt alors que la première barrière (1) est ouverte, et de telle sorte que lorsque la première barrière (1) est ouverte, 1) est fermé, le chemin de chargement est bloqué et la voie de sortie est libre.

2. Agencement selon la revendication 1, dans lequel un rideau (9) est disposé sur la deuxième barrière (3) pour une détection par détection d'obstacle du véhicule de transport automatique (5).

3. Agencement selon la revendication 2, où le rideau (9) est un rideau à chaînes.

4. Agencement selon l'une des revendications précédentes, dans lequel le dispositif de transmission d'effort mécanique (7) comprend un moyen flexible de transmission d'effort de traction, notamment constitué de : corde, ligne, câble en acier (21), bande.

5. Agencement selon l'une des revendications précédentes, la première barrière (1) ayant un premier contrepoids (11) et la deuxième barrière (3) ayant un deuxième contrepoids (13) afin d'équilibrer au moins le poids de la planche de barrière respective.

6. Agencement selon la revendication 5, le contrepoids de l'une des barrières surcompensant le poids de la planche de barrière associée et le contrepoids de l'autre barrière sous-compensant le poids de la planche de barrière associée, de sorte qu'un état d'équilibre naturel se produit lorsque les deux barrières sont libérées, dans lequel l'une L'une des barrières est fermée et l'autre des barrières est ouverte.

7. Agencement selon l'une des revendications 5 à 6, dans lequel au moins une des barrières présente une butée (15) de telle sorte que la planche de barrière ne peut pas être déplacée en dessous de la position horizontale.

8. Agencement selon l'une des revendications 5 à 7, dans lequel le contrepoids est disposé sur une flèche (17) sur au moins une des barrières, la flèche (17) étant disposée de telle sorte qu'une ligne de liaison imaginaire entre le centre de gravité du contrepoids et le point de pivotement de la barrière avec la barrière la planche forme un angle supérieur à 90° et inférieur à 180°, de sorte que le contrepoids se trouve en dehors d'un point mort lorsque la barrière est en position de verrouillage du fait de la position horizontale de la planche de la barrière.

9. Système comprenant un agencement selon l'une des revendications précédentes, le véhicule de transport automatique (5) avec fonction de détection d'obstacle et d'arrêt, et un système de guidage (19) pour guider et naviguer le véhicule de transport automatique (5) à travers le chargement stationnaire. zone.

10. Système selon la revendication 9, le système comprenant la zone de chargement stationnaire sous la forme d'un poste de chargement dans lequel le chemin de sortie du véhicule de transport automatique (5) passe transversalement au chemin de chargement.

11. Système selon l'une des revendications 9 à 10, dans lequel le système de guidage (19) pour guider et naviguer le véhicule de transport automatique (5) comprend un câble (21) disposé dans le plancher.

12. Système selon l'une des revendications 9 à 11, dans lequel le chemin de chargement passe par une rampe de chargement et est aligné transversalement au sens de déplacement dans le chemin de sortie du véhicule de transport automatique (5), de sorte que la première barrière (1) et la deuxième barrière (3) sont alignées perpendiculairement à les uns les autres dans un état imaginaire fermé.

13. Système selon l'une des revendications 9 à 12, le véhicule de transport automatique (5) étant un camion industriel.

14. Système selon la revendication 13, le véhicule de transport comportant un tracteur et une remorque, le système de guidage (19) étant conçu pour déclencher un arrêt automatique du véhicule de transport automatique (5) dans la zone de chargement stationnaire à côté de la rampe de chargement, le système comportant un moyen d'entrée (23), dans lequel le moyen d'entrée (23) est conçu pour transmettre un signal au système de guidage (19) lorsqu'une entrée d'un utilisateur est détectée sur le moyen d'entrée (23) afin d'initier le mouvement du véhicule de transport automatique (5) Grâce au système de guidage (19), le lancement de l'approche lorsque la deuxième barrière fermée (3) est détectée est empêché par la détection d'obstacles et la fonction d'arrêt du véhicule de transport automatique (5).

15. Système selon l'une des revendications 9 à 14, dans lequel les moyens d'entrée (23)
